Europäisches Patentamt

(19) European Patent Office

Office européen des brevets

(11) Veröffentlichungsnummer: **0 441 234 A1**

(12) **EUROPÄISCHE PATENTANMELDUNG**

(21) Anmeldenummer: 91101175.7

(22) Anmeldetag: 30.01.91

(51) Int. Cl.5: **D21H 19/82**, D21H 19/22, D21H 19/30, C09J 123/08, C09D 177/00, C09D 123/08

(30) Priorität: 17.08.90 DE 4026040
03.02.90 DE 4003158

(43) Veröffentlichungstag der Anmeldung:
14.08.91 Patentblatt 91/33

(84) Benannte Vertragsstaaten:
AT BE CH DE DK ES FR GB IT LI LU NL SE

(71) Anmelder: PKL Verpackungssysteme GmbH
Kennedydamm 15-17
W-4000 Düsseldorf 30(DE)

(72) Erfinder: Gensch, Ingo, Dipl.-Ing.
Fuchsgracht 22
W-5172 Linnich(DE)
Erfinder: Hahn, Alfred
Heinrichstrasse 3
W-4353 Oer-Erkenschwick(DE)

(74) Vertreter: Cohausz & Florack Patentanwälte
Postfach 14 01 61 Schumannstrasse 97
W-4000 Düsseldorf 1(DE)

(54) Kunststoffbeschichtetes Papier/Karton.

(57) Die Erfindung bezieht sich auf ein kunststoffbeschichtetes Papier/Karton, bei dem die Kunststoffbeschichtung in Coextrusionstechnik auf das Papier aufgebracht ist. Als Kunststoffbeschichtung wird ein Polyamid als Sperrschicht und ein Polymer als Haftvermittler verwendet. Das Polymer ist entweder ein Terpolymer auf der Basis von Ethylenacrylsäureester mit 5 - 15 Vol.% Acrylsäureester und 2 - 5 Vol.% Maleinsäureanhydrid und der Rest Ethylen oder ein Ethylenacrylsäurepolymer mit 3 - 9 Vol.% Comonomergehalt und Rest Ethylen, wobei insbesondere das Ethylenacrylsäure-Copolymer mit Metallionen vernetzt ist.

EP 0 441 234 A1

## KUNSTSTOFFBESCHICHTETES PAPIER/KARTON

Bei einem bekannten kunststoffbeschichteten Papier/Karton besteht die Kunststoffbeschichtung aus Polyvinylidenchlorid (PVDC). Ein solches kunststoffbeschichtetes Papier besitzt eine hohe Wasserdampfsperre und ist fett- und aromadicht. Auch seine Herstellung ist unproblematisch, weil sich das PVDC unmittelbar auf das Papier auftragen läßt und durch definierte Trocknungen fest am Papier haftet. Diesen Vorteilen stehen Probleme der umweltverträglichen Entsorgung von mit PVDC beschichtetem Papier gegenüber. Deshalb ist man bemüht, ein mit einem anderen Kunststoff beschichtetes Papier zu entwickeln, das neben den positiven Eigenschaften der Wasserdampf-, Fett- und Aromadichtigkeit auch hinsichtlich der Entsorgung unproblematisch ist.

Gelöst wird diese Aufgabe mit einem kunststoffbeschichteten Papier/Karton, das gekennzeichnet ist durch in Coextrusionstechnik auf das Papier/Karton aufgebrachtes Polyamid als Sperrschicht mit einem Polymer als Haftvermittler, das entweder

a) ein Terpolymer auf der Basis von Ethylenacrylsäureester mit 5 - 15 Vol.% Acrylsäureester und 2 - 5 Vol.% Maleinsäureanhydrid und Rest Ethylen ist oder

b) ein Ethylenacrylsäure-Copolymer mit 3 - 9 Vol.% Comonomergehalt und Rest Ethylen ist, wobei insbesondere das Ethylenacrylsäure-Copolymer mit Metallionen vernetzt ist.

Die Beschichtung ist auf Feedblock-Coextrusions-Beschichtungsanlagen ohne weiteres möglich, wobei als Feedblockverteilung ein AB-Adapter verwendet werden kann. Sofern das kunststoffbeschichtete Papier heißsiegelfähig sein soll, ist es erforderlich, einen ABA- oder ABC-Adapter einzusetzen, mit dem außen eine Heißsiegelschicht aufgebracht werden kann. Vorzugsweise wird als Heißsiegelschicht das gleiche Material wie für den Haftvermittler eingesetzt. Der ausgewählte Haftvermittler gewährleistet, daß es in der Grenzschicht nicht zu einer Delamination kommt, vielmehr wird eine gute Verbindung zwischen dem Papier und der Sperrschicht hergestellt. Das beschichtete Papier zeichnet sich durch eine gute Planlage und eine hohe Flexibilität auch bei Temperaturen unter 0 °C aus. Selbst bei extremen mechanischen Beanspruchungen bleiben die Dichteeigenschaften erhalten. Insbesondere bei einer Beschichtung mit einem Polyamid (PA6) mit niedriger Viskosität hat das kunststoffbeschichtete Papier eine hohe mechanische Zerreißfestigkeit, weshalb ein solches Papier für die Verpackung von scharfkantigen, insbesondere tiefgefrorene Güter, geeignet ist. Vergleichsuntersuchungen mit PVDC-beschichteten Papieren im Dauertest ergaben, daß die Wasserdampf- und Sauerstoffundurchlässigkeit bei dem erfindungsgemäßen Papier deutlich weniger abnahm als bei einem PVDC-beschichteten Papier. Die Verarbeitung des erfindungsgemäßen Papiers auf schnellaufenden Abpackanlagen läßt sich genau so schnell wie beim Einsatz von PVDC-beschichtetem Papier durchführen, da das erfindungsgemäße Papier wegen des eingesetzten Haftvermittlers gute Haftsiegeleigenschaften hat. Im Gegensatz zu dem PVDC-beschichteten Papier ist es insbesondere bei dem Papier mit dem als Haftvermittler eingesetzten Polymer möglich, zu einer dichten Siegelnaht selbst dann zu kommen, wenn der Siegelnahtbereich nicht völlig sauber ist. Dieser Vorteil wirkt sich besonders beim Verpacken von Füllgut aus, das nur mit zusätzlichem Aufwand aus dem Siegelnahtbereich entfernt werden kann.

Bevorzugte Stärken für die beiden Lagen sind insgesamt 10 - 40 g/m². Die Verteilung dieser Stärken ist vorgegeben durch die Technologie des Feedblocks. Sie kann von 10 Vol.% zu 90 Vol.% bis 90 Vol.% zu 10 Vol.%, vornehmlich jedoch 50 Vol.% zu 50 Vol.% betragen.

## Patentansprüche

1. Kunststoffbeschichtetes Papier/Karton, **gekennzeichnet durch** in Coextrusionstechnik auf das Papier/Karton aufgebrachtes Polyamid als Sperrschicht mit einem Polymer als Haftvermittler, das entweder

   a) ein Terpolymer auf der Basis von Ethylenacrylsäureester mit 5 - 15 Vol.% Acrylsäureester und 2 - 5 Vol.% Maleinsäureanhydrid und Rest Ethylen oder

   b) ein Ethylenacrylsäure-Copolymer mit 3 - 9 Vol.% Comonomergehalt und Rest Ethylen.

   ist.

2. Kunststoffbeschichtetes Papier/Karton nach Anspruch 1, **dadurch gekennzeichnet**, daß das Ethylenacrylsäure-Copolymer mit Metallionen vernetzt ist.

**Europäisches Patentamt**

**EUROPÄISCHER RECHERCHENBERICHT**

Nummer der Anmeldung

**EP 91 10 1175**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-1 394 883  (DOW CHEMICAL)<br>* Seite 4, Zeilen 5 - 43; Ansprüche 1, 9, 11 *<br>– – – | 1 | D 21 H 19/82<br>D 21 H 19/22<br>D 21 H 19/30<br>C 09 J 123/08 |
| X | PATENT ABSTRACTS OF JAPAN vol. 7, no. 230<br>(M-249)(1375) 12 Oktober 1983,<br>& JP-A-58 122816 (ASAHI KASEI) 21 Juli 1983,<br>* das ganze Dokument *<br>– – – – – | 1-2 | C 09 D 177/00<br>C 09 D 123/08 |

|  | RECHERCHIERTE SACHGEBIETE (Int. Cl.5) |
|---|---|
|  | D 21 H<br>B 32 B<br>C 09 J<br>C 09 D |

Der vorliegende Recherchenbericht wurde für alle Patentansprüche erstellt

| Recherchenort | Abschlußdatum der Recherche | Prüfer |
|---|---|---|
| Den Haag | 17 Mai 91 | FOUQUIER J.P. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument